# EUROPÄISCHE PATENTANMELDUNG

(11) **EP 2 687 096 A1**
(43) Veröffentlichungstag der Anmeldung: **22.01.2014**
(21) Anmeldenummer: 12177052.3
(22) Anmeldetag: 19.07.2012
(51) Int. Cl.: A01P 1/00, A01N 37/44, A01N 47/12, A01N 31/08, A01N 31/10, A01N 31/16, A01N 25/30

(54) **Mikrobiozide Zusammensetzung und deren Verwendung zur Konservierung technischer Produkte**

(71) Anmelder: Straetmans high TAC GmbH, 22143 Hamburg (DE)
(72) Erfinder: Straetmans, Udo, Dr., 22143 Hamburg (DE); Straetmans, Felix, 22143 Hamburg (DE)
(74) Vertreter: Glawe, Delfs, Moll

(57) **Zusammenfassung**

Gegenstand der Erfindung ist eine mikrobiozide Zusammensetzung, die ein Biozid ausgewählt aus der Gruppe bestehend aus Phenolen und Carbamaten und zusätzlich wenigstens ein C8-Amphotensid enthält. Die Erfindung betrifft ferner die Verwendung einer solchen Zusammensetzung zur Konservierung wässriger Produkte.

## Beschreibung

Die Erfindung betrifft eine mikrobiozide Zusammensetzung und deren Verwendung zur Konservierung technischer Produkte. Viele wässrige technische Produkte und Produkthilfsmittel sind anfällig für das Wachstum unerwünschter Keime wie beispielsweise Bakterien und Fungi und können dadurch unbrauchbar werden. Sie werden daher häufig mithilfe von Bioziden konserviert.

Eine Reihe wirksamer Biozide wie beispielsweise phenolische Biozide und Biozide auf Carbamatbasis sind häufig nur schwer wasserlöslich und können deswegen nicht oder nur unter Inkaufnahme erheblicher Nachteile wie beispielsweise dem Zusatz "umwelttechnisch unerwünschter Lösemittel als Biozid für wässrige technische Produkte" formuliert werden.

Der Erfindung liegt die Aufgabe zugrunde, eine kostengünstige und wirksame Biozidzusammensetzung zur Verfügung zu stellen, die sich einfach in wässrige Produkte einbringen lässt.

Die erfindungsgemäße mikrobiozide Zusammensetzung weist ein Biozid ausgewählt aus der Gruppe bestehend aus Phenolen und Carbamaten und zusätzlich wenigstens ein C8-Amphotensid auf.

Zunächst seien einige im Rahmen der Erfindung verwendete Begriffe erläutert.

Eine mikrobiozide Zusammensetzung ist eine Zubereitung aus chemischen Stoffen, denen bestimmungsgemäß die Eigenschaft innewohnt, Schadorganismen (Mikroorganismen wie Bakterien, Viren oder Fungi) zu töten oder zumindest deren Lebensfunktionen einzuschränken. Der Begriff bezeichnet eine anwendungsfertig formulierte Zusammensetzung, die zu konservierenden Produkten zugegeben werden kann. Ein Lebewesen wird dann zum Schadorganismus, wenn es durch sein massenhaftes oder deplaziertes Auftreten die Gesundheit und das Wohlbefinden des Menschen und seiner Haus- und Nutztiere gefährdet, wenn es die Qualität von Gegenständen beeinträchtigt oder wenn es gewerbliche und industrielle Prozesse stört.

Der Begriff Phenole bzw. phenolische Biozide bezeichnet phenolgruppenhaltige Moleküle mit biozider Wirkung. Der Begriff Carbamate bezeichnet biozide Wirkstoffe, die Salze oder Ester der Carbamidsäuren sind und eine entsprechende biozide Wirksamkeit entfalten. Besonders bevorzugt sind Phenole und/oder Carbamate, die in der Biozid-Richtline 98/8/EG (incl. Anlagen) genannt sind.

Ein C8-Amphotensid ist ein amphoteres Tensid, bei dem die lipophile Alkylkette acht C-Atome enthält.

Die Erfindung hat erkannt, dass überraschenderweise zum einen die nur schwer wasserlöslichen Biozide auf Phenol-oder Carbamatbasis solubilisiert werden und zum anderen eine synergistische Wirkung dahingehend auftritt, dass die selbst nicht bioziden C8-Amphotenside die mikrobiozide

Wirkung der genannten Biozide auf Phenol- oder Carbamatbasis verstärken. Ein möglicher und die Patentanmeldung nicht bindender Erklärungsversuch für diese überraschende, synergistische Wirkung könnte sein, dass in der Kombination von C8-Amphotensiden und phenolischen Bioziden bzw. Bioziden auf Carbamatbasis ein destabilisierender Effekt auf die äußere Membran der zu bekämpfenden Mikroorganismen ausgeübt wird.

In einer erfindungsgemäßen Zusammensetzung beträgt das Gewichtsverhältnis von Biozid ausgewählt aus der Gruppe phenolischer Biozide und Biozid auf Carbamatbasis einerseits und C8-Amphotensiden andererseits bevorzugt 1 zu 10 bis 1 zu 1. Eine erfindungsgemäße Zusammensetzung kann bevorzugt 3 bis 40 Gew.-%, weiter vorzugsweise 5 bis 30 Gew.-%, weiter vorzugsweise 10 bis 20 Gew.-% der genannten Biozide (Phenole und/oder Carbamate) enthalten. Die erfindungsgemäße Zusammensetzung ist bevorzugt eine wässrige Lösung. Sie kann weitere Inhaltsstoffe neben den genannten enthalten, in einer weiteren bevorzugten Ausführungsform kann sie ausschließlich die genannten Inhaltsstoffe (incl. Wasser) enthalten.

Der C8-Amphotensidgehalt einer erfindungsgemäßen Zusammensetzung beträgt bevorzugt 5 bis 40 Gew.-%, weiter vorzugsweise 15 bis 25 Gew.-%.

Die C8-Amphotenside sind bevorzugt ausgewählt aus der Gruppe bestehend aus Natriumoctylaminopropionat (CAS 68610-44-6), Natriumcapryloamphodipropionat (CAS 68815-55-4), Natriumcapryloamphopropionat (CAS 68877-55-4), und Natriumcapryloamphodiacetat (CAS 68608-64-0). Natriumoctylaminopropionat ist besonders bevorzugt.

Die erfindungsgemäß verwendeten phenolischen Biozide sind bevorzugt ausgewählt aus der Gruppe bestehend aus p-Chlormetakresol, Benzylphenol, Chlorophen, Trichlosan und o-Phenyphenol. Unter diesen Phenolen ist o-Phenyphenol besonders bevorzugt.

Unter den Bioziden auf der Basis von Carbamaten ist besonders bevorzugt 3-Iodo-2-propynylbutylcarbamat (IPBC, CAS 55406-53-6).

Gegenstand der Erfindung ist ferner die Verwendung einer erfindungsgemäßen mikrobioziden Zusammensetzung in wässrigen Produkten, insbesondere Produkten ausgewählt aus der Gruppe bestehend aus Kühlschmierstoffen, Reinigungsmitteln, Desinfektionsmitteln, Leimen, Klebstoffen, Hilfsmitteln für die Papierindustrie (Füllstoffsuspensionen, Streichmassen, Pigmentslurries), Polituren, Wachsemulsionen und Verdickungsmitteln. Die erfindungsgemäße Verwendung erlaubt insbesondere eine wirksame Konservierung gegen schädliche Mikroorganismen wie Bakterien und Fungi. In dem zu konservierenden Produkt beträgt im Rahmen der erfindungsgemäßen Verwendung der Zusammensetzung die Konzentration der genannten Biozide (Phenole und/oder Carbamate) bevorzugt 0,005 bis 0,1 Gew.-%. Die C8-Amphotenside sind in dem zu konservierenden Produkt bevorzugt in einer Konzentration von 0,01 bis 1 Gew.-%, vorzugsweise 0,03 bis 0,2 Gew.-% enthalten.

Die Erfindung wird nachfolgend anhand von Ausführungsbeispielen erläutert.

### Beispiel 1

Dieses Beispiel beschreibt die Herstellung eines erfindungsgemäßen Mikrobiozids.

In 50 g einer kommerziell erhältlichen ca. 45 %igen wässrigen Lösung von Natriumoctylaminopropionat werden 15 g o-Phenylphenol unter Rühren gelöst. Ein geringes Erwärmen auf 30-40 °C kann das Auflösen fördern. Diese Lösung wird mit 35 g Wasser zum anwendungsfertigen (verkaufsfertigen) Endprodukt verdünnt.

### Beispiel 2

Die mikrobiozide Wirksamkeit von erfindungsgemäßen Zusammensetzungen und Vergleichsbeispielen wurde geprüft gemäß Europäischem Arzneibuch 2008: 5.1.3. Prüfung analog der B: VIII.14.

Die nachfolgenden Biozidzusammensetzungen (in wässriger Lösung) wurden als Prüfmuster geprüft. Die nicht erfindungsgemäßen Vergleichsbeispiele sind mit VB 2.1 bis VB 2.6 bezeichnet, die erfindungsgemäßen Beispiele mit B 2.1 bis B 2.3.

| | |
|---|---|
| VB 2.1 | 0,50 % NaOAP (Natriumoctylaminopropionat) |
| VB 2.2 | 1,0 % NaOAP |
| VB 2.3 | 0,50 % C8A (Gemisch aus C8-Amphocarboxylaten) |
| VB 2.4 | 1,0 % C8A |
| B 2.1 | 0,10 % OPS (25 % oPP + 50 % NaOAP) |
| VB 2.5 | 0,10 % OF (45 % oPP in wäss. KOH =̂450 ppm oPP) |
| B 2.2 | 0,15 % OPS |
| B 2.3 | 0,15 % IPS (5,0 % IPBC + 60 % NaOAP) |
| VB 2.6 | 0,10 % ES-2000 (20 % IPBC =200 ppm IPBC) |

Die Prüfmaterialien gemäß den Beispielen und Vergleichsbeispielen wurden mittels Dipslides auf Keimfreiheit geprüft.

Anschließend wurde ein Prüfstamm (Mischinokulum von Bakterien und Pilzen aus verdorbenen Kühlschmierflüssigkeiten) bereitgestellt. Es ist bekannt, dass in solchen Flüssigkeiten der Betriebspraxis die widerstandsfähigsten Keime enthalten sind. Durch die sich wiederholende Behandlung mit Bioziden selektieren sich solche Keime, die für derartige Tests am besten geeignet sind. Es sind: Pseudomonas spec sowie Fusarium spec zusammen mit Acremonium spec. Die auftretenden Pseudomonaden sind: Pseudomonas aeruginosa, Pseudomonas putida, Pseudomonas cepacia etc.

Diese Keimsuspension wird ständig (wöchentlich) mit frisch hergestellter Kühlschmierstoffemulsion verdünnt und mikrobiologisch überprüft. Die durchschnittliche Keimzahl beträgt ca. 10⁷ Keime/ml.

99 g jedes Prüfmusters wurden mit 1 g des Prüfstamms (Mischinokulum) kontaminiert.

Nach fünf Tagen Inkubationszeit bei 30°C erfolgte eine Keimzahlbestimmung (Dipslides) gemäß der oben genannten Vorschrift. Inkubationszeit und -temperatur sind so gewählt, dass eine für die betriebliche Praxis eindeutige Entscheidung über die Wirksamkeit getroffen werden kann. Kein mikrobiologisches Wachstum (< 10 B/ml) bedeutet eine hinreichende Wirksamkeit für die betriebliche Praxis. Schwaches mikrobiologisches Wachstum (ca. 10³ B/ml) oder starkes mikrobiologisches Wachstum (ca. 10⁵ B/ml) bedeuten eine unzureichende Wirksamkeit.

Die Ergebnisse waren wie folgt:

| | |
|---|---|
| VB 2.1 | starkes mikrobiologisches Wachstum |
| VB 2.2 | schwaches mikrobiologisches Wachstum |
| VB 2.3 | starkes mikrobiologisches Wachstum |
| VB 2.4 | starkes mikrobiologisches Wachstum |
| B 2.1 | kein mikrobiologisches Wachstum |
| VB 2.5 | schwaches mikrobiologisches Wachstum |
| B 2.2 | kein mikrobiologisches Wachstum |
| B 2.3 | kein mikrobiologisches Wachstum |
| VB 2.6 | starkes mikrobiologisches Wachstum |

Man erkennt, dass die erfindungsgemäßen Beispiele 2.1 bis 2.3 bei sehr geringer Konzentration von o-Phenylphenol bzw. IPBC eine hohe mikrobiozide Wirksamkeit aufweisen, es findet kein mikrobiologisches Wachstum statt.

Die synergistische Wirkung erschließt sich insbesondere bei einer Zusammenschau mit den Vergleichsbeispielen. Bei einem Vergleich von B 2.3 mit VB 2.6 zeigt sich, dass in VB 2.6 trotz einer etwa ohnehin Faktor 3 erhöhten Konzentration von IPBC im VB 2.6 eine deutlich schlechtere mikrobiozide Wirksamkeit (starkes mikrobiologisches Wachstum im VB 2.6) auftritt als im B 2.3, indem die synergistische Wirkung von IPBC und Natriumoctylaminopropionat auftritt.

B 2.1 zeigt, dass bereits sehr geringe Konzentration von o-Phenylphenol in Kombination mit Natriumoctylaminopropionat gute mikrobiozide Wirksamkeit (kein mikrobiologisches Wachstum) zeigen. Insbesondere ein Vergleich mit dem VB 2.1 bis 2.4 zeigt, dass C8-Amphotenside die Natriumoctylaminoproprionat alleine auch in deutlich höheren Konzentrationen keine oder allenfalls eine geringe mikrobiozide Wirksamkeit aufweisen. Ein Vergleich von B 2.1 mit VB 2.5 zeigt, dass o-Phenylphenol ohne die synergistische Kombination mit Natriumoctylaminoproprionat trotz deutlich höherer Konzentration eine schlechtere mikrobiozide Wirksamkeit aufweist.

## Patentansprüche

1. Mikrobiozide Zusammensetzung, **dadurch gekennzeichnet, dass** sie ein Biozid ausgewählt aus der Gruppe bestehend aus Phenolen und Carbamaten und zusätzlich wenigstens ein C8-Amphotensid enthält.

2. Mikrobiozide Zusammensetzung nach Anspruch 1, **dadurch gekennzeichnet, dass** das Gewichtsverhältnis von Biozid ausgewählt aus der Gruppe bestehend aus Phenolen und Carbamaten und C8-Amphotensiden 1:10 bis 1:1 beträgt.

3. Mikrobiozide Zusammensetzung nach Anspruch 1 oder 2, **dadurch gekennzeichnet, dass** sie 3 bis 40 Gew.-%, weiter vorzugsweise 5 bis 30 Gew.-%, weiter vorzugsweise 10 bis 20 Gew.-% der Biozide ausgewählt aus der Gruppe bestehend aus Phenolen und Carbamaten enthält.

4. Mikrobiozide Zusammensetzung nach einem der Ansprüche 1 bis 3, **dadurch gekennzeichnet, dass** sie 5 bis 40 Gew.-%, weiter vorzugsweise 15 bis 25 Gew.-% C8-Amphotenside enthält.

5. Mikrobiozide Zusammensetzung nach einem der Ansprüche 1 bis 4, **dadurch gekennzeichnet, dass** sie ein C8 - Amphotensid ausgewählt aus der Gruppe bestehend aus Natriumoctylaminopropionat (CAS 68610-44-6), Natriumcapryloamphodipropionat (CAS 68815-55-4), Natriumcapryloamphopropionat (CAS 68877-55-4), und Natriumcapryloamphodiacetat (CAS 68608-64-0) enthält.

6. Mikrobiozide Zusammensetzung nach einem der Ansprüche 1 bis 5, **dadurch gekennzeichnet, dass** sie ein phenolisches Biozid ausgewählt aus der Gruppe bestehend aus p-Chlormetakresol, Benzylphenol, Chlorophen, Trichlosan und o-Phenyphenol enthält.

7. Mikrobiozide Zusammensetzung nach einem der Ansprüche 1 bis 5, **dadurch gekennzeichnet, dass** sie 3-Iodo-2-propynylbutylcarbamat (IPBC, CAS 55406-53-6) enthält.

8. Verwendung einer mikrobioziden Zusammensetzung nach einem der Ansprüche 1 bis 7 in wässrigen Produkten, insbesondere Produkten ausgewählt aus der Gruppe bestehend aus Kühlschmierstoffen, Reinigungsmitteln, Desinfektionsmitteln, Leimen, Klebstoffen, Hilfsmitteln für die Papierindustrie (Füllstoffsuspensionen, Streichmassen, Pigmentslurries), Polituren, Wachsemulsionen und Verdickungsmitteln.

9. Verwendung nach Anspruch 8, **dadurch gekennzeichnet, dass** die Konzentration der Biozide ausgewählt aus der Gruppe bestehend aus Phenolen und Carbamaten in dem Produkt 0,005 bis 0,1 Gew.-% beträgt.

10. Verwendung nach Anspruch 8 oder 9, **dadurch gekennzeichnet, dass** die Konzentration der C8-Amphotenside in dem Produkt 0,01 bis 1 Gew.-%, vorzugsweise 0,03 bis 0,2 Gew.-% beträgt.
